# DEMANDE DE BREVET EUROPEEN

(11) **EP 4 066 708 A1**
(43) Date de publication de la demande: **05.10.2022**
(21) Numéro de dépôt: 22162361.4
(22) Date de dépôt: 16.03.2022
(51) Int. Cl.: A47J 47/14

(54) **EMBALLAGE TRANSPORTABLE ET REUTILISABLE NOTAMMENT POUR LE CONDITIONNEMENT DE DENREES ALIMENTAIRES**

(30) Priorité: 29.03.2021 FR 2103190
(71) Demandeur: ATS Technologies Société à responsabilité limitée à associé unique, 68250 Pfaffenheim (FR)
(72) Inventeur: EHRET, Nicolas, 68000 COLMAR (FR); GROSS, Eric, 68000 COLMAR (FR)
(74) Mandataire: Cabinet Laurent & Charras

(57) **Abrégé**

L'invention concerne un emballage (1) transportable et réutilisable notamment pour le conditionnement de denrées alimentaires et plus particulièrement de repas prêts à livrer ou à emporter. Il comporte une boite principale (2), deux contenants (4, 4') pour des denrées alimentaires indépendants et rangés côte à côte dans la boite, un couvercle secondaire (5, 5') pour fermer chaque contenant, et un couvercle principal (3) pour fermer la boite en comprimant les couvercles secondaires. Chaque contenant (4, 4') est lié à son couvercle secondaire (5, 5') en position fermée par un emboitement vertical conique. Le couvercle principal (3) comporte deux languettes de verrouillage (33) opposées pour se clipper de chaque côté de la boite (2). En position verrouillée, le couvercle principal (3) exerce un effort de compression vertical sur les couvercles secondaires (5, 5') ayant pour effet de contraindre davantage l'emboitement vertical conique et de garantir ainsi une étanchéité durable des contenants (4, 4') fermés. L'emballage (1) est transportable facilement et dans n'importe quelle position.

## Description

### Domaine technique

La présente invention concerne un emballage transportable et réutilisable notamment pour le conditionnement de denrées alimentaires et plus particulièrement de repas prêts à livrer ou à emporter, ledit emballage comportant une boite principale comportant un fond entouré d'une paroi latérale, délimitant un logement pour recevoir au moins un contenant indépendant, un couvercle principal agencé pour fermer ledit logement et se verrouiller sur ladite boite principale, ledit au moins un contenant indépendant comportant un fond entouré d'une paroi latérale, délimitant un récipient pour recevoir lesdites denrées alimentaires, un couvercle secondaire agencé pour fermer ledit récipient, ledit couvercle principal étant agencé pour se superposer au moins en partie audit couvercle secondaire lorsqu'il est verrouillé sur ladite boite principale.

### Technique antérieure

Dans le domaine du transport de denrées alimentaires et en particulier des plats prêts à livrer ou à emporter, les acteurs de la restauration utilisent majoritairement des emballages à usage unique, le plus souvent en matières plastiques. Or la règlementation évolue et une loi anti-gaspillage prévoit la disparition de tous les emballages plastiques à usage unique d'ici 2040. La convention citoyenne pour le climat propose en outre de ramener cette échéance à 2023. Il y a donc urgence à trouver des alternatives pour les acteurs de la restauration et les entreprises de livraison de repas.

Des solutions voient le jour sous la forme d'emballages qui se recyclent ou se compostent, à base de carton ou de matières végétales telles que le blé, le maïs, la pomme de terre, la canne à sucre, etc. sous forme de plastiques biosourcés. Les solutions à base de carton sont très consommatrices d'eau et les solutions à base de matières végétales utilisent de la surface agricole. D'autres solutions privilégient des emballages qui sont consignés, à base de verre, d'inox ou de plastique. Les emballages en verre sont lourds et cassables. Les emballages en inox sont chers, ne sont pas transparents pour y voir le contenu, et ne passent pas au four à microondes. Les emballages en plastique ne sont pas suffisamment étanches. En outre, les emballages consignés sont souvent constitués de contenants individuels. Pour un repas, il faut compter au moins deux, voire trois contenants individuels pour un menu comprenant une entrée, un plat principal et un dessert. La gestion, le stockage et le transport de ces contenants individuels sont complexes et sources d'erreurs de livraison.

Pour tenter de résoudre ces problèmes, il est possible de superposer les contenants individuels et de les assembler par une poignée qui crochète chaque contenant. Ce système est difficilement transportable autrement qu'à pied.

D'autres solutions proposent des emballages avec un double couvercle, par exemple un premier couvercle transparent pour voir le contenu de la boite, et un second couvercle ajouré, c'est à dire ouvert en son centre, qui se superpose au premier couvercle, se verrouille sur des ergots latéraux de la boite pour exercer une pression de fermeture entre le premier couvercle et le bord d'ouverture de la boite. Quelques exemples sont décrits dans les publications FR1376510, EP1495987 et EP2683619. Les solutions décrites dans les publications EP2543292 et KR20180113391 concernent plus particulièrement des emballages isothermes à double paroi isolée et à double couvercle superposé. Cependant, toutes ces solutions nécessitent au moins un joint d'étanchéité entre le bord d'ouverture de la boite et le premier couvercle, ce joint d'étanchéité étant soit rapporté, soit surmoulé. La présence d'un joint d'étanchéité pose des problèmes d'hygiène puisqu'il constitue à lui seul un nid à microbes, rend le recyclage impossible si le joint est surmoulé, renchérit le coût de l'emballage si le joint est rapporté. L'emballage obtenu ne répond donc pas aux critères d'écoconception.

### Exposé de l'invention

La présente invention vise à pallier ces inconvénients en proposant un emballage pour le conditionnement de repas en particulier mais pas exclusivement, éco-conçu, à faible empreinte carbone, cet emballage étant lavable et réutilisable un nombre de cycles déterminé, entièrement recyclable à l'issue du nombre de cycles prédéterminé, particulièrement économique et robuste, répondant aux normes alimentaires, compatible aussi bien avec les températures de réfrigération et les microondes, facile à manipuler, à stocker et à utiliser, de conception modulaire pour s'adapter au besoin, garantissant intrinsèquement une étanchéité durable sans organe d'étanchéité ajouté, tel qu'un joint, un opercule ou similaire, pouvant être transporté sans respecter l'horizontalité de l'emballage, et ceci par tout moyen de transport sans aucune limite, pouvant convenir aussi bien pour des aliments froids, chauds, solides et/ou liquides, offrant à l'utilisateur un set de déjeuner élégant, présentable et personnalisable, et pouvant être consigné pour faciliter sa collecte.

Dans ce but, l'invention concerne un emballage du genre indiqué en préambule, caractérisé en ce que ledit contenant et ledit couvercle secondaire comportent des moyens d'emboitement de forme complémentaire agencés pour réaliser un emboitement conique lorsque ledit couvercle secondaire ferme ledit contenant, en ce que ledit couvercle principal et ledit couvercle secondaire comportent des surfaces d'appui horizontales en correspondance, et en ce que ladite boite principale et ledit couvercle principal comportent des moyens de verrouillage de forme complémentaire agencés pour appliquer un effort de compression d'axe vertical sur ledit couvercle secondaire et contraindre ledit emboitement conique entre ledit couvercle secondaire et ledit contenant, lorsque ledit emballage est fermé et verrouillé pour garantir une étanchéité durable dudit contenant fermé.

Grâce à cette double fermeture combinant « emboitement conique » et « compression maintenue dans l'axe dudit emboitement conique », l'emballage selon l'invention permet de garantir intrinsèquement une étanchéité durable sans organe d'étanchéité ajouté, tel qu'un joint, un opercule ou similaire.

Dans une forme préférée de l'invention, lesdits moyens d'emboitement de forme complémentaire agencés pour réaliser un emboitement conique comportent d'une part un biseau sur le bord supérieur de la paroi latérale du contenant agencé pour créer sur le pourtour dudit contenant une surface d'appui inclinée par rapport à la verticale en direction du fond, et d'autre part une lèvre intérieure périphérique, s'étendant du couvercle secondaire en direction du contenant et agencée pour se déformer élastiquement au contact de ladite surface d'appui inclinée lorsque ledit couvercle secondaire est emboité sur ledit contenant.

Lesdites surfaces d'appui horizontales en correspondance peuvent comporter d'une part un pourtour plan prévu sur ledit couvercle principal ou sur ledit couvercle secondaire et d'autre part un bourrelet de compression au droit dudit pourtour plan prévu sur ledit couvercle secondaire ou sur ledit couvercle principal.

De manière avantageuse, lesdits moyens de verrouillage de forme complémentaire comportent d'une part au moins deux languettes de verrouillage, symétriquement opposées et liées chacune audit couvercle principal par une zone charnière, et d'autre part au moins deux ergots de verrouillage, symétriquement opposés et solidaires de la paroi latérale de ladite boite principale, chaque languette de verrouillage étant agencée pour se clipper sur l'ergot de verrouillage qui lui correspond.

Lesdits ergots de verrouillage peuvent être avantageusement constitués par une arête inférieure de la paroi latérale de ladite boite principale, de sorte que les languettes de verrouillage du couvercle principal se verrouillent en dessous ladite boite principale.

Dans la forme préférée de l'invention, ledit couvercle secondaire est en partie ou totalement translucide ou transparente pour visualiser l'intérieur du contenant, et ledit couvercle principal est ajouré et comporte au moins une ouverture superposée audit couvercle secondaire.

Ledit couvercle secondaire peut comporter une partie centrale surélevée par rapport à un pourtour, et ladite ouverture du couvercle principal est dimensionnée pour entourer la partie centrale surélevée dudit couvercle secondaire.

Selon les variantes de réalisation, ledit emballage peut comporter au moins deux contenants indépendants disposés côte à côte dans le logement de ladite boite principale. Dans ce cas, ledit couvercle principal peut comporter au moins deux ouvertures adjacentes.

Ledit contenant peut présenter une hauteur supérieure à la profondeur du logement de ladite boite principale de sorte qu'il dépasse d'une hauteur déterminée de ladite boite pour faciliter sa préhension.

Ladite boite principale et/ou le couvercle principal peuvent être réalisés en tout ou partie à partir de polymères thermoplastiques, non alimentaires, biosourcés ou non, recyclés ou non, renforcés ou non. Et ledit au moins un contenant et/ou ledit au moins un couvercle secondaire peuvent être réalisés en tout ou partie à partir de polymères thermoplastiques de grade alimentaire.

Avantageusement, ledit au moins un contenant et/ou ledit au moins un couvercle secondaire peuvent comporter une peau intérieure réalisée dans une matière de grade alimentaire, et une peau extérieure réalisée dans une matière non alimentaire, recyclée ou non.

Ledit emballage peut avantageusement comporter des moyens d'identification intégrés à ladite boite principale et/ou audit au moins un contenant, et choisis parmi le groupe comprenant une étiquette électronique, un code-barres, un QR code. Si lesdits moyens d'identification sont sous la forme d'un code-barres ou d'un QR code, ils peuvent être réalisés par un procédé de gravure au laser.

Le but de l'invention est également atteint par l'utilisation d'un tel emballage transportable et réutilisable, pour le conditionnement de denrées alimentaires froides, chaudes, solides et/ou liquides, et de produits commercialisés en vrac choisis dans le groupe comprenant les aliments, les produits cosmétiques, d'hygiène et d'entretien, les plantes, les médicaments.

### Brève description des dessins

La présente invention et ses avantages apparaîtront mieux dans la description suivante de plusieurs modes de réalisation donnés à titre d'exemples non limitatifs, en référence aux dessins annexés, dans lesquels:

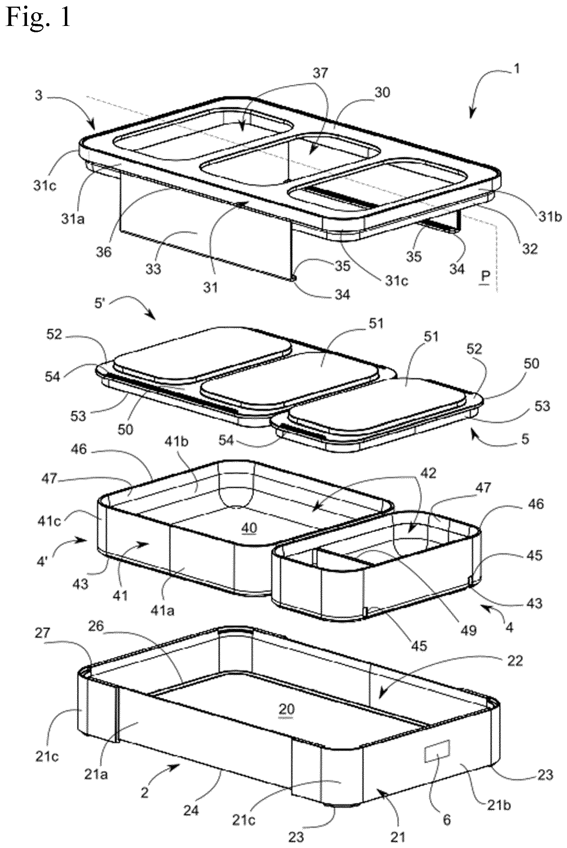

- la figure 1 est une vue éclatée en perspective d'un emballage selon l'invention,
- la figure 2 est une vue en perspective de l'emballage de la figure 1, en position fermée,
- la figure 3 est une vue en perspective de l'emballage de la figure 1, en position intermédiaire, le couvercle principal étant retourné sous la boite principale,
- la figure 4 est une vue de dessus de l'emballage de la figure 3,
- la figure 5 est une vue en perspective de l'emballage de la figure 1, en position ouverte, les couvercles secondaires des contenants ayant été retirés,
- la figure 6 est une vue en perspective d'un contenant fermé par un couvercle secondaire,
- la figure 7 est une vue en coupe transversale de l'emballage en position fermée de la figure 2,
- la figure 8 est une vue agrandie du détail VIII de l'emballage de la figure 7, et
- la figure 9 est une vue en coupe transversale de l'emballage en position intermédiaire de la figure 3.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures.

En référence aux figures, l'emballage 1 selon l'invention comporte une boite principale 2 associée à un couvercle principal 3, et deux contenants 4, 4' indépendants, associés chacun à un couvercle secondaire 5, 5' et rangés côte à côte à l'intérieur de la boite principale 2. Une fois assemblé, fermé et verrouillé, l'emballage 1 forme un tout homogène, compact, étanche, facile à manipuler, entreposer et transporter.

Les composants de l'emballage 1 ont tous une forme générale de parallélépipède rectangle. Cette forme est préférée puisqu'elle est simple à produire par des procédés de moulage ou d'injection classiques. En outre, cette forme est simple à manipuler, à entreposer et à empiler, sans perte de place. La boite principale 2 offre également un volume facile à détailler en fractions pour définir les volumes des contenants 4, 4' qu'elle peut contenir. Cette forme n'est toutefois pas limitative, et d'autres formes peuvent convenir, telles qu'une forme carrée, polygonale, cylindrique ou similaire.

Le nombre de contenants 4, 4' que la boîte principale 2 peut contenir, peut être égal à un, deux, trois ou plus, en fonction du volume de la boite principale 2 et du volume de chaque contenant indépendant 4, 4'. Cet emballage 1 est conçu de manière modulaire et peut s'adapter aisément à chaque besoin. Dans l'exemple représenté, l'emballage 1 comporte deux contenants 4, 4' de volumes différents : le contenant 4 correspondant sensiblement à 1/3 de la boîte principale 2 et le contenant 4' correspondant sensiblement aux 2/3 restants. L'emballage 1 représenté peut également contenir trois contenants 4 identiques, sans que ces exemples ne soient limitatifs.

L'emballage 1 de l'invention est notamment destiné au conditionnement de denrées alimentaires et plus particulièrement de repas prêts à livrer ou à emporter. Chaque contenant 4, 4' peut contenir une partie du repas, tel que l'entrée, le plat et le dessert, sans que cet exemple ne soit limitatif. Ainsi un repas complet peut être conditionné séparément dans les contenants 4, 4' mais réuni dans un emballage 1 unique et facile à transporter. L'emballage 1 offre ainsi une grande souplesse d'utilisation. Les contenants 4, 4' fermés par leurs propres couvercles secondaires 5, 5' forment à eux seuls des conditionnements étanches, qui permettent de préparer tout ou partie des plats en amont par le restaurateur. Lors de la commande d'un client ou lors de sa venue, les contenants 4, 4' préparés en amont et/ou les contenants 4, 4' préparés à la demande peuvent être combinés et réunis dans un même emballage 1. L'emballage 1 peut bien entendu convenir au conditionnement de toutes sortes de denrées alimentaires : froides, chaudes, solides et/ou liquides. Il peut également convenir à la restauration en générale, à la restauration collective, aux commerces alimentaires aussi bien pour des plats préparés que pour des aliments commercialisés en vrac, etc. Il peut enfin convenir à tout produit commercialisé en vrac, comme les produits cosmétiques, d'hygiène et d'entretien, les plantes, les médicaments, sans que ces exemples ne soient limitatifs.

L'emballage 1 est conçu pour être facilement transportable, lavable et réutilisable. Après un nombre de cycles déterminé, ou lorsqu'il commence à présenter des signes de fatigue, il peut être recyclé dans sa totalité puisqu'il est fabriqué à partir de polymères thermoplastiques entièrement recyclables, voire biodégradables en fonction du polymère utilisé.

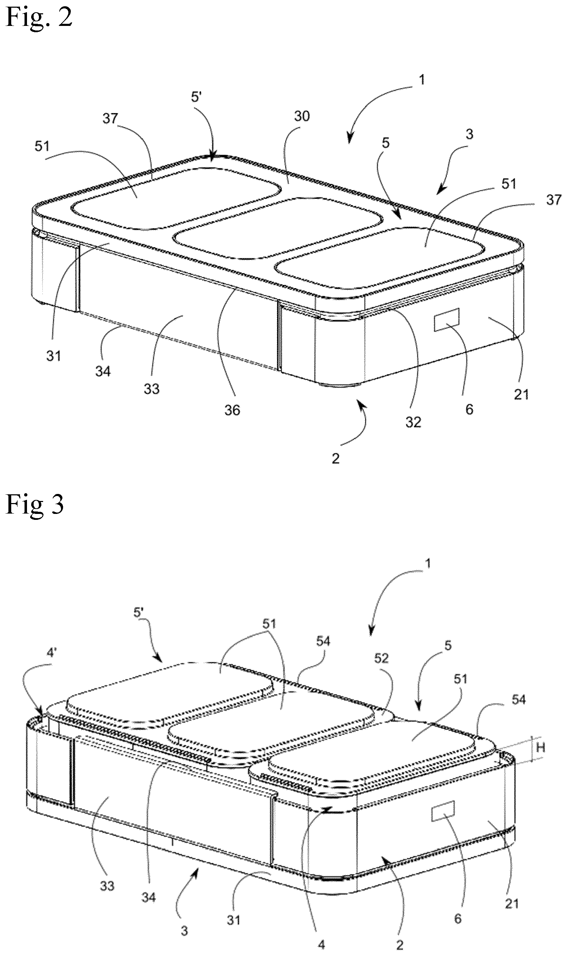

En référence aux figures, la boite principale 2 comporte un fond 20 entouré d'une paroi latérale 21. Elle délimite un logement 22 destiné à recevoir un ou plusieurs contenants 4, 4' disposés côte à côte. Le fond 20 est majoritairement plan et s'étend horizontalement. La paroi latérale 21 s'étend verticalement et comporte deux côtés longitudinaux 21a parallèles entre eux, et deux côtés transversaux 21b parallèles entre eux, reliés respectivement entre eux par des angles arrondis 21c. La boite principale 2 comporte des pieds 23 dans ses angles arrondis 21c. Les pieds 23 créent un intervalle Il entre l'arête inférieure 24 de la paroi latérale 21 et une surface de réception sur laquelle repose ladite boite. Cet intervalle I1 peut être plus important sur les côtés longitudinaux 21a pour permettre le clippage du couvercle principal 3 comme expliqué plus loin. Le fond 20 de la boite est en retrait par rapport à l'arête inférieure 24 de la paroi latérale 21 pour ménager un espace de rangement 25 du couvercle principal 3 lorsque l'emballage 1 est ouvert pour accéder aux contenants indépendants 4, 4' (figures 3, 4 et 9). A l'intérieur du logement 22, le fond 20 peut comporter un rebord périphérique 26 pour centrer les contenants 4, 4' dans la boite. Ce rebord périphérique 26 peut être absent ou être remplacé par une nervure périphérique, des pattes de positionnement radiales, ou tout autre moyen de centrage équivalent.

Le couvercle principal 3 comporte une plaque de fermeture 30 majoritairement plane qui s'étend horizontalement pour recouvrir toute la surface de la boite principale 2. Il comporte une bordure extérieure 31 périphérique, qui s'étend de la plaque 30 verticalement en direction de la boite principale 2 et du côté extérieur de la paroi latérale 21. La bordure extérieure 31 comporte deux côtés longitudinaux 3 la parallèles entre eux, et deux côtés transversaux 31b parallèles entre eux, reliés respectivement entre eux par des angles arrondis 31c. Le couvercle principal 3 comporte une jupe intérieure 32 périphérique, qui s'étend de la plaque 30 verticalement, en direction de la boite principale 2 et du côté intérieur de la paroi latérale 21. Le couvercle principal 3 comporte deux languettes de verrouillage 33, symétriques par rapport à un plan médian longitudinal P de l'emballage 1, et en opposition. Elles s'étendent de la bordure extérieure 31, et plus particulièrement des cotés longitudinaux 31a en direction de la boite principale 2. Elles ont une longueur qui couvre la hauteur des cotés longitudinaux 21a de la paroi latérale 21. Et elles comportent à leur extrémité libre un retour 34 pourvu d'un cran d'arrêt 35. Le cran d'arrêt 35 est agencé pour se clipper autour de l'arête inférieure 24 de la paroi latérale 21, l'arête inférieure 24 formant un ergot de verrouillage. Vues en coupe, les languettes de verrouillage 33 présentent une forme de L. Elles sont en outre liées chacune à la bordure extérieure 31 par une zone charnière 36 de plus faible épaisseur, pour avoir un degré de liberté en rotation autour de ladite zone charnière 36. Ainsi, elles peuvent pivoter entre une position verrouillée, telle qu'illustrée dans les figures, dans laquelle elles sont clippées sur la boite principale 2 pour former un tout indissociable, et une position déverrouillée (non représentée), dans laquelle elles sont désolidarisées de la boite principale 2 permettant de retirer le couvercle principal 3.

Dans cet exemple, le couvercle principal 3 se verrouille en dessous de la boite principale 2 offrant ainsi un emballage 1 sobre, esthétique et exempt de relief. Dans une variante non représentée, il peut aussi se verrouiller sur les côtés longitudinaux 21a de la boite principale 2. Dans ce cas, les languettes de verrouillage 33 peuvent présenter une forme droite et comporter chacune une encoche agencée pour se clipper sur un ergot de verrouillage saillant des côtés longitudinaux 21a de la paroi latérale 21. Bien entendu, ces exemples de réalisation ne sont pas limitatifs et toute autre forme de réalisation des moyens de verrouillage peut convenir.

Le couvercle principal 3 est, dans l'exemple représenté, ajouré et comporte des ouvertures 37 ménagées dans la plaque de fermeture 30. Ces ouvertures 37 sont au nombre de trois, sans que ce nombre ne soit limitatif. Et elles ont une forme sensiblement rectangulaire avec des angles arrondis. Elles sont identiques, disposées côte à côte, parallèles entre elles, et uniformément réparties sur le couvercle principal 3. Elles ont pour fonction de laisser apparaître au moins une partie du couvercle secondaire 5, 5' des contenants 4, 4'. Cette fonction est indispensable lorsque les couvercles secondaires 5, 5' sont translucides ou transparents pour visualiser le contenu des contenants 4, 4'. Ainsi, le contenu reste visible au travers du couvercle principal 3, même lorsque l'emballage 1 est fermé et verrouillé. Cette caractéristique permet un contrôle optique continu du contenu de l'emballage 1 à chaque étape de la préparation, par exemple d'un repas à emporter, pour garantir qu'il correspond à la commande du client.

En référence aux figures, chaque contenant 4, 4' comporte un fond 40 entouré d'une paroi latérale 41. Il délimite un récipient 42 pour recevoir un contenu, tels que des denrées alimentaires. Le fond 40 est majoritairement plan, s'étend horizontalement et est lié à la paroi latérale 41 par une partie courbe. La forme du récipient sensiblement en cuvette, sans angle droit, permet de faciliter le nettoyage du contenant 4, 4'. La paroi latérale 41 s'étend verticalement et comporte deux côtés longitudinaux 41a parallèles entre eux, et deux côtés transversaux 41b parallèles entre eux, reliés respectivement entre eux par des angles arrondis 41c. Le contenant 4, 4' repose sur une surface de réception par une arête inférieure 43 de la paroi latérale 41, formant un pied qui s'étend sur toute la périphérie du contenant et légèrement en retrait sous le contenant. Cette arête inférieure 43 peut coopérer avec le rebord périphérique 26 s'il est prévu à l'intérieur du logement 22 de la boite principale 2 pour centrer le contenant 4, 4' par rapport à la boite 2. Le fond 40 est en retrait par rapport à une surface de réception et forme un espace vide 44, qui peut avoir une fonction d'isolation thermique par rapport au fond 20 de la boite principale 2. Des encoches 45 sont prévues à la base de la paroi latérale 41 pour drainer l'eau de lavage qui pourrait s'accumuler dans cet espace vide 44.

Le bord supérieur 46 de la paroi latérale 41 du contenant 4, 4' comporte un biseau prévu du côté intérieur du récipient 42 pour créer une surface d'appui inclinée 47 par rapport à la verticale. Cette surface d'appui inclinée 47 s'étend sur toute la périphérie du contenant 4, 4' et forme un cône d'emboitement, s'étendant selon un axe vertical en direction du fond 40 du contenant. Le bord supérieur 46 de la paroi latérale 41 se termine par une surface d'appui horizontale 48. Le contenant 4, 4' peut comporter un ou plusieurs séparateurs 49, amovibles ou non, pour scinder le récipient 42 en moins deux compartiments.

Le couvercle secondaire 5, 5' comporte une plaque de fermeture 50 majoritairement plane, qui s'étend horizontalement pour recouvrir toute la surface du contenant 4, 4' qui lui correspond, et fermer le récipient 42. Il comporte une partie centrale 51 surélevée par rapport à un pourtour 52. Il comporte également une lèvre intérieure 53 périphérique, qui s'étend du pourtour 52 verticalement en direction du contenant 4, 4' au droit de la surface d'appui inclinée 47 du bord supérieur 46. Le couvercle secondaire 5, 5' comporte en outre un bourrelet de compression 54 saillant du pourtour 52, dans une direction opposée à la lèvre intérieure 53. Dans l'exemple représenté, chaque couvercle secondaire 5, 5' comporte deux bourrelets de compression 54 rectilignes, disposés symétriquement par rapport au plan médian P, sans que cet exemple ne soit limitatif.

Lorsque le couvercle secondaire 5, 5' est emboité verticalement, du haut vers le bas, sur le contenant 4, 4' qui lui correspond, la lèvre intérieure 53 rencontre sur sa trajectoire le cône d'emboitement créé par le biseau du bord supérieur 46, est contrainte par la surface d'appui inclinée 47 du cône d'emboitement au fur et à mesure de l'enfoncement du couvercle, et se déforme élastiquement dans le sens du cône d'emboitement. Cette déformation élastique a pour effet d'augmenter la surface de contact entre la lèvre intérieure 53 du couvercle et la surface d'appui inclinée 47 du contenant et de créer automatiquement un joint d'étanchéité sur tout le pourtour intérieur du contenant 4, 4', sans joint rapporté.

L'emballage 1 de l'invention est conçu pour garantir une étanchéité des contenants 4, 4' fermés par leur couvercle secondaire 5, 5', rangés côté à côté à l'intérieur de la boite principale 2, fermée par le couvercle principal 3. Cette garantie d'étanchéité permet de transporter l'emballage 1 dans n'importe quelle position, même à l'envers, sans risque de fuite. Pour atteindre cet objectif, le couvercle principal 3 permet de contraindre davantage l'emboitement vertical conique entre chaque couvercle secondaire 5, 5' et son contenant 4, 4' lorsqu'il est verrouillé sur la boite principale 2.

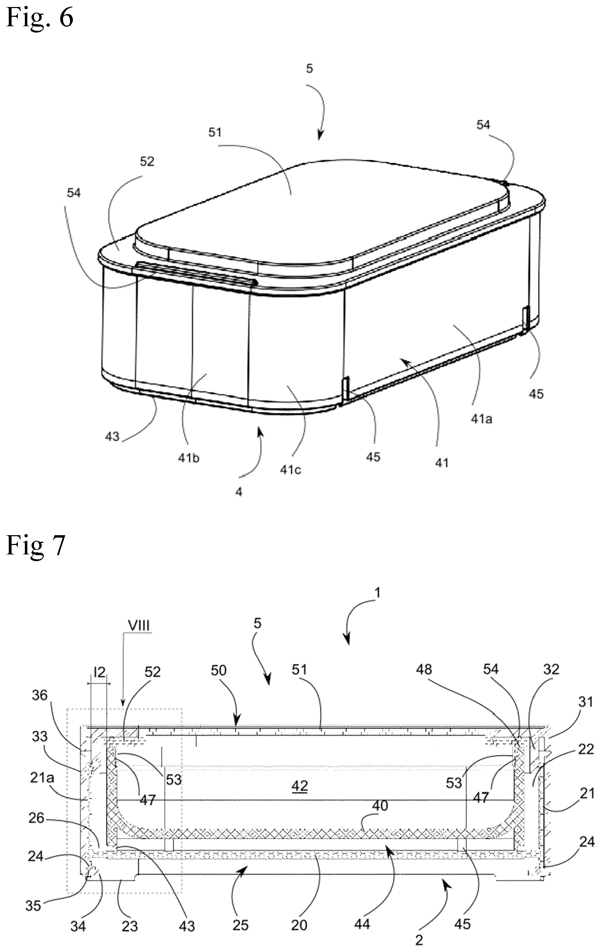

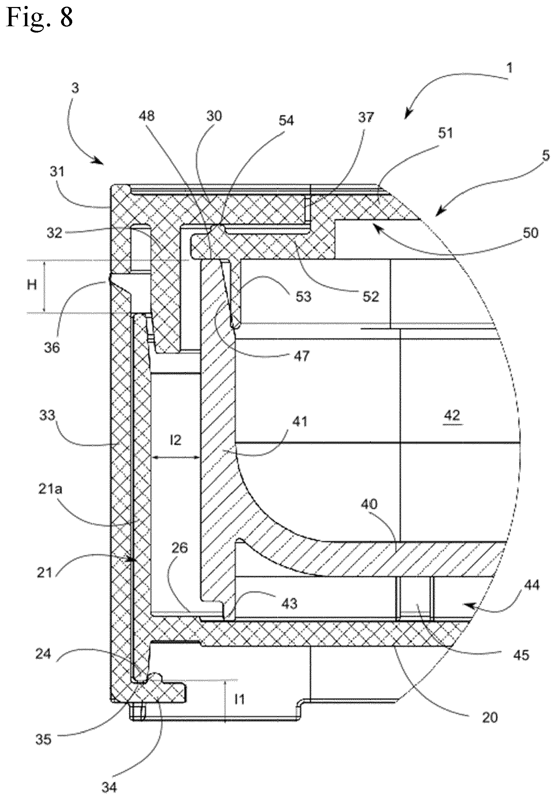

Les figures 7 et 8 illustrent en détail la conception des différents emboitements qui permettent d'atteindre cet objectif. Le couvercle principal 3 se superpose sur les couvercles secondaires 5, 5', les ouvertures 37 du couvercle principal 3 se positionnant autour des parties centrales surélevées 51 des couvercles secondaires 5, 5'. L'emboitement du couvercle principal 3 sur les couvercles secondaires 5, 5' contribuent au centrage et au maintien des contenants 4, 4' logés dans la boite principale 2. La jupe intérieure 32 du couvercle principal 3 se loge dans l'intervalle I2 existant entre la paroi latérale 41 des contenants 4, 4' et la paroi latérale 21 de la boite principale 2. La jupe intérieure 32 a une hauteur suffisante pour fermer cet intervalle I2 sur tout le pourtour de la boite. Lorsque le couvercle principal 3 est en place, la plaque de fermeture 30 repose sur les bourrelets de compression 54 des couvercles secondaires 5, 5' formant un appui plan sensiblement horizontal. Pour verrouiller le couvercle principal 3 sur la boite principale 2, les deux languettes de verrouillage 33 sont appuyées manuellement avec force sur les deux côtés opposés de la boîte principale 2 jusqu'à ce que chaque cran d'arrêt 35 se verrouille autour de l'arête inférieure 24 de la paroi latérale 21. Lors du verrouillage, le couvercle principal 3 exerce une pression verticale sur les couvercles secondaires 5, 5' via les bourrelets de compression 54, enfonçant les couvercles secondaires 5, 5' jusqu'à être en butée sur la surface d'appui horizontale 48 du bord supérieur 46 des contenants 4, 4'. Simultanément, l'emboitement conique est davantage contraint, ayant pour effet de déformer davantage la lèvre intérieure 53 et d'augmenter la surface de contact entre la lèvre intérieure 53 et la surface d'appui inclinée 47 du bord supérieur 46, pour parfaire l'étanchéité de cet assemblage conique.

Les figures 2 à 5 montre l'emballage 1 dans différentes positions d'utilisation. Dans la figure 2, l'emballage 1 est en position fermée permettant de transporter son repas, position dans laquelle le couvercle principal 3 est verrouillé sur la boite principale 2, bloquant en position les contenants 4, 4' qui sont fermés de manière étanche par les couvercles secondaires 5, 5', eux-mêmes comprimés par le couvercle principal 3.

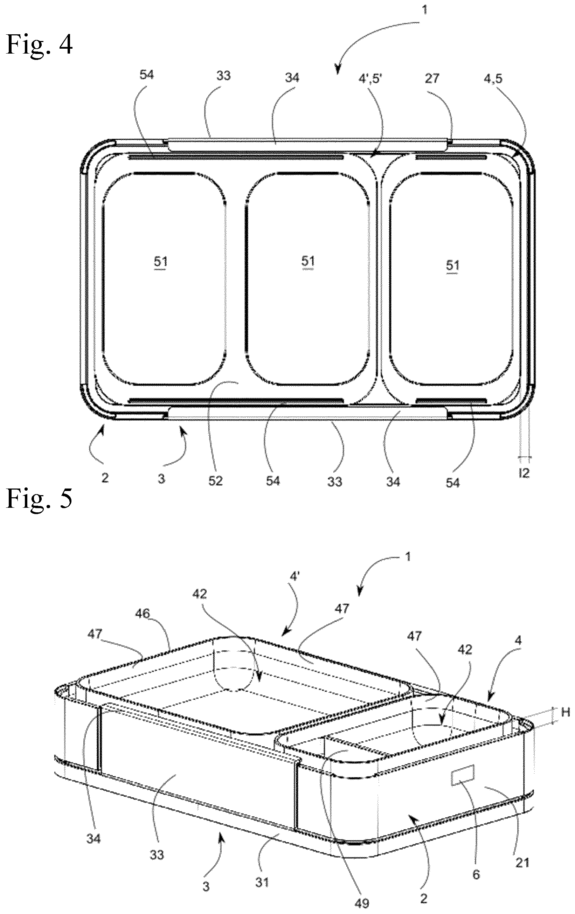

Dans les figures 3 et 4, l'emballage 1 est en position intermédiaire pour accéder aux contenants 4, 4', position dans laquelle le couvercle principal 3 est déverrouillé et retiré de la boite principale 2, libérant les contenants 4, 4' et les couvercles secondaires 5, 5'. Dans l'exemple représenté, les contenants 4, 4' ont une hauteur supérieure à la profondeur du logement 22 pour être saillants de la boite principale 2 d'une hauteur déterminée H. Cette hauteur déterminée H permet de saisir manuellement les contenants 4, 4' pour pouvoir les sortir de la boite et les replacer dans la boite aisément. En outre, un intervalle I2 est ménagé entre le pourtour des contenants 4, 4' rangés côte à côte dans le logement 22, et la paroi latérale 21 de la boite principale 2. Cet intervalle I2 facilite également la préhension des contenants 4, 4'. Pour garantir cet intervalle I2, le fond 20 de la boite principale 2 peut disposer d'un rebord périphérique 26 qui forme une butée avec l'arête inférieure 43 de la paroi latérale 41 des contenants 4, 4'. Ainsi, les contenants 4, 4' sont centrés par rapport au couvercle principal 3.

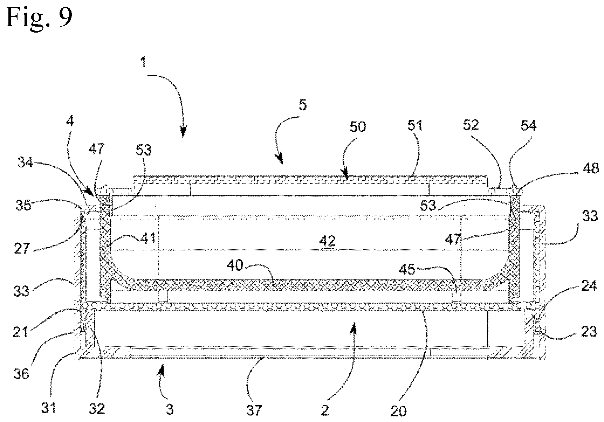

Dans cette position intermédiaire, le couvercle principal 3 peut être avantageusement retourné pour être rangé sous la boite principale 2 dans l'espace de rangement 25 prévu à cet effet. En référence plus particulièrement à la figure 9, le couvercle principal 3 est emboité sous la boite principale 2, autour de la partie inférieure de la paroi latérale 21, englobant l'arête inférieure 24 et les pieds 23, entre la bordure extérieure 31 et la jupe intérieure 32. La jupe intérieure 32 est en appui sur le fond 20. Les languettes de verrouillage 33 sont appuyées manuellement avec force sur les deux côtés opposés de la boîte principale 2 jusqu'à ce que chaque cran d'arrêt 35 se verrouille autour de l'arête supérieure 27 de la paroi latérale 21. Dans cette position de rangement, le couvercle principal 3 forme un tout indissociable avec la boite principale 2.

Dans la figure 5, l'emballage 1 est en position ouverte pour déjeuner, position dans laquelle les couvercles secondaires 5, 5' sont retirés donnant accès à l'intérieur des contenants 4, 4'. La figure 6 montre un contenant 4 seul, indépendant de la boite principale 2, et fermé par un couvercle secondaire 5.

Les composants de l'emballage 1 peuvent être fabriqués par tout procédé connu, tel que le moulage, l'injection, le thermoformage, mais également l'impression 3D ou similaire, notamment dans des polymères thermoplastiques, plus précisément des polymères thermoplastiques techniques permettant une déformation élastique.

La boite principale 2, de même que le couvercle principal 3, qui n'assurent aucun contact alimentaire, peuvent être réalisés dans des polymères sans grade alimentaire, tels que des polymères thermoplastiques biosourcés ou non, des polymères thermoplastiques recyclés ou non, renforcés ou non avec des charges végétales ou minérales, tels que l'acide polylactique (PLA), le polyamide (PA), le polypropylène (PP), le polyoxyméthylène (POM), l'acrylonitrile butadiène styrène (ABS), ou toute autre matière équivalente.

Les contenants 4, 4', de même que les couvercles secondaires 5, 5', qui assurent un contact alimentaire, doivent respecter des exigences réglementaires. Ils peuvent être réalisés dans des polymères thermoplastiques de grade alimentaire, tels que le polyamide (PA), le polypropylène (PP), le polyoxyméthylène (POM), l'acrylonitrile butadiène styrène (ABS), ou toute autre matière équivalente.

Les contenants 4, 4', de même que les couvercles secondaires 5, 5', peuvent également être réalisés en deux matières différentes, par un procédé de bi-injection, de surmoulage, ou similaire, à savoir une première matière de grade alimentaire pour la peau intérieure des contenants 4, 4' et des couvercles secondaires 5, 5' qui est en contact alimentaire, et une seconde matière sans grade alimentaire pour la peau extérieure qui n'est pas en contact alimentaire. Ces matières peuvent être sélectionnées dans les listes mentionnées ci-dessus. Ainsi, il est avantageux, de choisir pour la peau intérieure une matière vierge, et pour la peau extérieure une matière recyclée. Cette solution permet de réduire les coûts matières, tout en garantissant le respect des normes alimentaires. Bien entendu, il n'est pas exclu d'obtenir dans le futur également le grade alimentaire sur de la matière recyclée.

L'emballage 1 selon l'invention peut être complété par un moyen d'identification intégré à la boite principale 2 et/ou aux contenants 4, 4' pour assurer une traçabilité de l'emballage 1. Cette traçabilité peut s'opérer via une plateforme informatique pour améliorer le retour des emballages 1 et/ou organiser un circuit de collecte, avec ou sans consigne. Le moyen d'identification peut être choisi dans le groupe comprenant une étiquette électronique, un code-barres, un QR code, ou similaire. L'étiquette électronique peut être intégrée dans la paroi de la boite 2 et/ou des contenants 4, 4' lors de leur fabrication, notamment par surmoulage. Dans ce cas, on choisira une étiquette électronique qui résiste aux microondes. Le marquage d'un code-barres ou d'un QR code peut être réalisé par tout procédé de gravure, tel que notamment une gravure au laser, qui a l'avantage d'être indélébile. Bien entendu, tout autre moyen d'identification équivalent peut convenir.

L'emballage 1 peut également être facilement personnalisé à moindre coût, par le choix des couleurs des composants, mais aussi par l'ajout de décors imprimés et/ou gravés. Ainsi les emballages 1 peuvent correspondre à l'identité visuelle d'une enseigne.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Emballage (1) transportable et réutilisable notamment pour le conditionnement de denrées alimentaires et plus particulièrement de repas prêts à livrer ou à emporter, ledit emballage comportant une boite principale (2) comportant un fond (20) entouré d'une paroi latérale (21), délimitant un logement (22) pour recevoir au moins un contenant (4, 4') indépendant, un couvercle principal (3) agencé pour fermer ledit logement (22) et se verrouiller sur ladite boite principale (2), ledit au moins un contenant (4, 4') indépendant comportant un fond (40) entouré d'une paroi latérale (41), délimitant un récipient (42) pour recevoir lesdites denrées alimentaires, un couvercle secondaire (5, 5') agencé pour fermer ledit récipient (42), et ledit couvercle principal (2) étant agencé pour se superposer au moins en partie audit couvercle secondaire (5, 5') lorsqu'il est verrouillé sur ladite boite principale (2), **caractérisé en ce que** ledit contenant (4, 4') et ledit couvercle secondaire (5, 5') comportent des moyens d'emboitement de forme complémentaire agencés pour réaliser un emboitement conique lorsque ledit couvercle secondaire (5, 5') ferme ledit contenant (4, 4'), **en ce que** ledit couvercle principal (3) et ledit couvercle secondaire (5, 5') comportent des surfaces d'appui horizontales en correspondance, et **en ce que** ladite boite principale (2) et ledit couvercle principal (3) comportent des moyens de verrouillage de forme complémentaire agencés pour appliquer un effort de compression d'axe vertical sur ledit couvercle secondaire (5, 5') et contraindre ledit emboitement conique entre ledit couvercle secondaire (5, 5') et ledit contenant (4, 4'), lorsque ledit emballage (1) est fermé et verrouillé pour garantir une étanchéité durable dudit contenant (4, 4') fermé.

2. Emballage (1) selon la revendication 1, **caractérisé en ce que** lesdits moyens d'emboitement de forme complémentaire agencés pour réaliser un emboitement conique comportent d'une part un biseau sur le bord supérieur (46) de la paroi latérale (41) du contenant (4, 4') agencé pour créer sur le pourtour dudit contenant (4, 4') une surface d'appui inclinée (47) par rapport à la verticale en direction du fond (40), et d'autre part une lèvre intérieure (53) périphérique, s'étendant du couvercle secondaire (5, 5') en direction du contenant et agencée pour se déformer élastiquement au contact de ladite surface d'appui inclinée (47) lorsque ledit couvercle secondaire (5, 5') est emboité sur ledit contenant (4, 4').

3. Emballage (1) selon l'une quelconque des revendications précédentes, **caractérisé en ce que** lesdites surfaces d'appui horizontales en correspondance comportent d'une part un pourtour plan prévu sur ledit couvercle principal (3) ou sur ledit couvercle secondaire (5, 5'), et d'autre part un bourrelet de compression (54) au droit dudit pourtour plan prévu sur ledit couvercle secondaire (5, 5') ou sur ledit couvercle principal (3).

4. Emballage selon l'une quelconque des revendications précédentes, **caractérisé en ce que** lesdits moyens de verrouillage de forme complémentaire comportent d'une part au moins deux languettes de verrouillage (33), symétriquement opposées et liées chacune audit couvercle principal (3) par une zone charnière (36), et d'autre part au moins deux ergots de verrouillage, symétriquement opposés et solidaires de la paroi latérale (21) de ladite boite principale (2), chaque languette de verrouillage (33) étant agencée pour se clipper sur l'ergot de verrouillage qui lui correspond.

5. Emballage (1) selon la revendication 4, **caractérisé en ce que** lesdits ergots de verrouillage sont constitués par une arête inférieure (24) de la paroi latérale (21) de ladite boite principale (2), de sorte que les languettes de verrouillage (33) du couvercle principal (3) se verrouillent en dessous ladite boite principale (2).

6. Emballage (1) selon l'une quelconque des revendications précédentes, **caractérisé en ce que** ledit couvercle secondaire (5, 5') est en partie ou totalement translucide ou transparente pour visualiser l'intérieur du contenant (4, 4'), et **en ce que** ledit couvercle principal (3) est ajouré et comporte au moins une ouverture (37) superposée audit couvercle secondaire (5, 5').

7. Emballage (1) selon la revendication 6, **caractérisé en ce que** ledit couvercle secondaire (5, 5') comporte une partie centrale surélevée (51) par rapport à un pourtour (52), et **en ce que** ladite ouverture (37) du couvercle principal (3) est dimensionnée pour entourer la partie centrale surélevée (51) dudit couvercle secondaire (5, 5').

8. Emballage (1) selon l'une quelconque des revendications précédentes, **caractérisé en ce qu'**il comporte au moins deux contenants (4, 4') indépendants disposés côte à côte dans le logement (22) de ladite boite principale (2).

9. Emballage (1) selon l'une quelconque des revendications 6 à 8, **caractérisé en ce que** ledit couvercle principal (3) comporte au moins deux ouvertures (37) adjacentes.

10. Emballage (1) selon l'une quelconque des revendications précédentes, **caractérisé en ce que** ledit contenant (4, 4') présente une hauteur supérieure à la profondeur du logement (22) de ladite boite principale (2) de sorte qu'il dépasse d'une hauteur déterminée (H) de ladite boite pour faciliter sa préhension.

11. Emballage (1) selon l'une quelconque des revendications précédentes, **caractérisé en ce que** ladite boite principale (2) et/ou le couvercle principal (3) sont réalisés en tout ou partie à partir de polymères thermoplastiques, non alimentaires, biosourcés ou non, recyclés ou non, renforcés ou non, et **en ce que** ledit au moins un contenant (4, 4') et/ou ledit au moins un couvercle secondaire (5, 5') sont réalisés en tout ou partie à partir de polymères thermoplastiques de grade alimentaire.

12. Emballage (1) selon la revendication 11, **caractérisé en ce que** ledit au moins un contenant (4, 4') et/ou ledit au moins un couvercle secondaire (5, 5') comportent une peau intérieure réalisée dans une matière de grade alimentaire, et une peau extérieure réalisée dans une matière non alimentaire, recyclée ou non.

13. Emballage (1) selon l'une quelconque des revendications précédentes, **caractérisé en ce qu'**il comporte des moyens d'identification (6) intégrés à ladite boite principale (2) et/ou audit au moins un contenant (4, 4'), et choisis parmi le groupe comprenant une étiquette électronique, un code-barres, un QR code.

14. Emballage (1) selon la revendication 13, **caractérisé en ce que** lesdits moyens d'identification (6) sous la forme d'un code-barres ou d'un QR code sont réalisés par un procédé de gravure au laser.

15. Utilisation d'un emballage (1) transportable et réutilisable selon l'une quelconque des revendications précédentes, pour le conditionnement de denrées alimentaires froides, chaudes, solides et/ou liquides, et de produits commercialisés en vrac choisis dans le groupe comprenant les aliments, les produits cosmétiques, d'hygiène et d'entretien, les plantes, les médicaments.
